# EUROPEAN PATENT APPLICATION

(11) **EP 1 640 644 A1**
(43) Date of publication of application: **29.03.2006**
(21) Application number: 05012399.1
(22) Date of filing: 09.06.2005
(51) Int. Cl.: F16J 15/32, F16F 9/36

(54) **Oil seal**

(30) Priority: 27.09.2004 JP 2004278602
(71) Applicant: Carl Freudenberg KG, 69469 Weinheim (DE)
(72) Inventor: Oyama, Takayuki, Fukushima-shi Fukushima 960-1193 (JP)

(57) **Abstract**

An oil seal used in a front fork suspension of a motor cycle or the like, which can be fitted in a narrow space with a convenient fitting work even though countermeasures for preventing entrance of foreign matter such as slurry or dust during running are required, is provided. An oil seal (1) for sealing an annular gap defined between a housing (2) and a shaft which are concentrically assembled to each other, comprises an oil seal lip (23), a plurality of dust seal lips (25,26) integrally molded with the oil seal lip (23) and having distal ends facing to the atmospheric side (A), and a core (10) formed thereto with a fold-back part (12) and a second cylindrical part (13) which is extended from the fold-back part (12), having an end face (13) made into press contact with a side end face (4) of a protrusion formed on the housing (2) in order to secure the oil seal (1).

## Description

### BACKGROUND OF THE INVENTION

### Field of the Invention

The present invention relates to an oil seal used in, for example, in a front fork suspension of a motor cycle, and is also used in other various general industrial fields.

### Description of the Related Art

An oil seal used in, for example, in a front fork suspension of a motor cycle, and fitted for sealing an annular gap defined between a housing and a shaft which are concentrically assembled together being movable relative to each other, requires in particular such measures as to prevent entrance of foreign matter such as slurry or dust during running since it has to be used in areas involving severe use conditions, and accordingly, a dust seal is provided in addition to the oil seal on the atmospheric side thereof. A configuration in which an oil seal and a dust seal are incorporated is disclosed in, for example, Japanese Patent Laid-Open NO.2003-185028.

Referring to Fig. 7 which shows an oil seal and dust seal 102 which have been conventionally used, for example, in a front fork suspension of a motor cycle, the oil seal 101 includes a core 110 composed of a first cylindrical part 111 fitted in the inner periphery of a housing 102 through the intermediary of a fixed seal part 121, a second cylindrical part 112 curved in a U-like shape from the distal end of the first cylindrical part 111 on the atmospheric side A and a flange part 113 extending in an inner peripheral direction of a shaft from the distal end of the second cylindrical part 112 on the enclosed fluid side B, and a seal body part 120 composed of an oil sealing lip 122 molded integrally with the fixed sealing part 121, cured and bonded to the inner peripheral distal end of the flange part 113 and extending toward the sealed fluid side B, and a dust preventing lip 123 extending toward the atmospheric side A and including an anti-dust lip 123. The dust seal 102 comprises an anti-dust core 130 composed of a cylindrical part 131 which is fitted in the inner periphery of the housing 103 through the intermediary of a fixed seal part 141 and a flange part 132 which is extended outward from the distal end of the cylindrical part 131 on the atmospheric side A, and a first dust seal lip 142 which is molded integral with the fixed seal part 141 and is cured and made into close contact with the antidust core 130, having its distal end part extending toward the atmospheric side A, and a second dust seal lip 143 having a distal end part extending toward the atmospheric side, similar to the first dust seal lip 142.

In the above-mentioned fitted condition, the oil seal 101 has a main function capable of sealing an object to be sealed while the dust seal 102 has a main function capable of sealing slurry, dust and the like. Thus, it is required to individually fit two seals having different functions, that is, the oil seal 101 and the dust seal 102, in the annular gap, and accordingly, there has been raised such a problem that a wide space should be ensured for fitting therein two seals 101, 102 and further, the fitting work thereof becomes complicated. Further, it is required to fabricate a fitting part for securing a seal within the annular space by using a seal retaining component (snap ring), and accordingly, the cutback of a work for forming the fitting part has been desirable.

### SUMMARY OF THE INVENTION

The present invention is devised in view of the above-mentioned problems, and according an object of the present invention is to provided an oil seal which can be fitted in a narrow space and in a convenient manner even through it is used in a front fork suspension of a motor cycle or the like, with a severe use condition during running, so as to require in particular countermeasures for preventing entrance of foreign matter such as slurry or dust.

To the end, according to the present invention as stated in claim 1, there is provided an oil seal adapted to fit in an annular gap defined between two members which are assembled together, being rotatable, relative to each other, characterized by a core fitted in one of the members, and an oil seal lip cured and bonded to the core and made in slidable contract with the other one of the members so as to sealing an object to be sealed (which will be referred to as "sealing object"), and a plurality of dust seal lips integrally molded with the oil seal lip, being off from the oil seal lip toward the atmospheric side, and having distal end parts extended toward the atmospheric side and made in slide contract with the other one of the members in order to seal off external dust or the like.

Further, according to the invention as stated in claim 2, there is provided in the oil seal as set forth in claim 1, characterized in that a cylindrical part extended toward the outer periphery from a fold-back part of the core is made into press-contact with a protrusion formed on the other one of the members.

Further, according to the invention as stated in claim 3, there is provided an oil seal as set forth in claim 1, characterized in that a seal retaining part which is fixed by the fixed seal part on the outer peripheral side of the core, is made into press contact with the protrusion formed on the other one of the members.

The present invention exhibits the following advantages: That is, the oil seal having such a configuration as stated above, there are provided the plurality of dust seal lips integrally incorporated with the oil seal lip, and accordingly, there could be ensured both function capable of sealing an object to be sealed, and function capable of sealing off foreign matter such as slurry or dust by providing the single oil seal alone. Accordingly, since the single oil seal alone is fitted, the fitting work therefor can be further simplified, and since it can be fitted in a narrow space, a fabrication for forming a fitting part for fitting an oil seal can be reduced.

Further, in the oil seal as stated in claim 2, since the cylindrical part extended toward the outer periphery from the fold-back part of the core is made in press-contact with the protrusion formed in the one of the members, no seal retaining component for fixing the oil seal in the annular gap is required, thereby it is possible to carry out the fitting work thereof in a more convenient manner. Since the cylindrical part of the core and the fixed seal part carry out sealing in cooperation with each other, holding therebetween the protrusion formed in one of the members, it is possible to enhance the sealing ability for the one of the members.

Further, in the oil seal as stated in claim 3, since the seal retaining part fixed by the fixed seal part on the outer peripheral side of the core is made in press contact with the protrusion formed on the one of the members, the necessity of fitting of the seal retaining part as a separate component can be eliminated when the oil seal is inserted in the annular gap, thereby it is possible to carry out the fitting work in a more convenient manner. Moreover, since the sealing is made by both seal retaining part and fixed seal part in cooperation so as to hold therebetween the protrusion formed on the one of the members, thereby it is possible to enhance the sealing ability for the one of the members.

### BRIEF DESCRIPTION OF THE DRAWINGS

Fig. 1 is a sectional view illustrating an oil seal in an embodiment of the present invention;
Fig. 2 is an enlarged sectional view illustrating a part P in Fig. 1;
Fig. 3 is a sectional view illustrating an oil seal in a second embodiment of the present invention:
Fig. 4 is a sectional view illustrating a third embodiment of the present invention;
Fig. 5 is an enlarged sectional view illustrating a part P in Fig. 4;
Fig. 6(1) is a perspective view, (2) is a plan view and (3) is a front view, illustrating a seal retaining part; and
Fig. 7 is a sectional view illustrating a conventional oil seal and dust seal.

### DESCRIPTION OF THE PREFERRED EMBODIMENT

Explanation will be made of a preferred embodiment of the present invention, as a typical example, with reference to the accompanying drawings. It is noted that the technical scope of the present invention should not be limited to the contents stated in the embodiments unless otherwise specified.

### First Embodiment

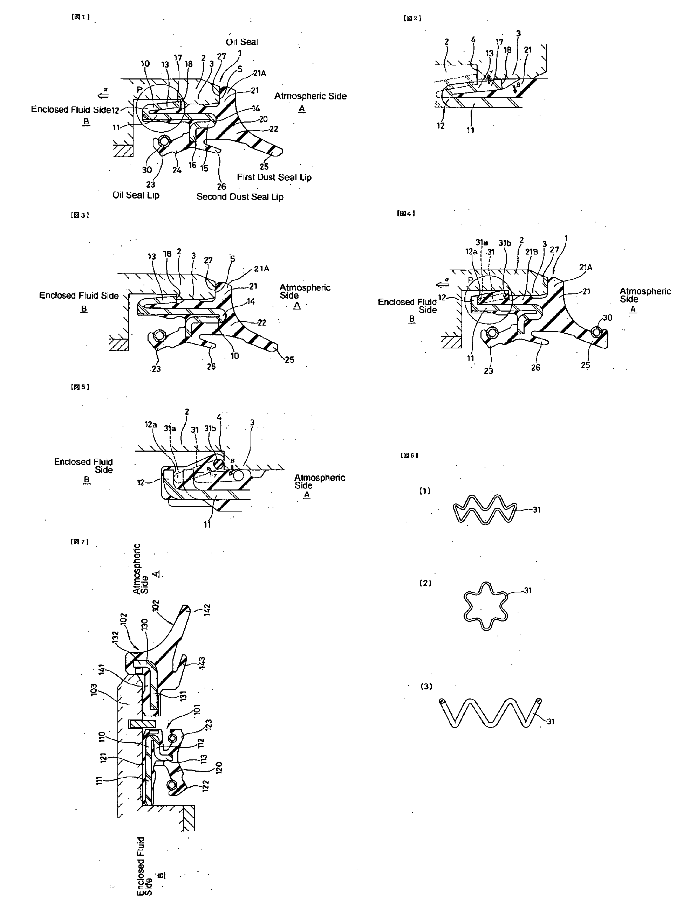

Referring to Fig. 1 which is a sectional view illustrating an oil seal in a first embodiment of the present invention, the oil seal 1 is composed of a core 10 fitted in a housing 2, a rubber-like elastic sealing part 20, a gutter spring 30 fitted in a recess formed in the sealing part 20.

The core 10 is composed of a first cylindrical part 11 fitted in the housing 2 through the intermediary of a fixed seal part 21 which will be described later, a first fold-back part 12 folded back toward the outer peripheral side at the distal end of the first cylindrical part 11 on the enclosed fluid side B, a second cylindrical part 13 extended from the firs fold-back part 12 toward the outer peripheral side on the atmospheric side A and having an end face 18 made into press contact with a side end face 4 of a protrusion 3 formed on the housing, a second fold-back part 14 folded back toward the inner peripheral side at the distal end part of the first cylindrical part 11 on the atmospheric side A, a third cylindrical part 15 extended from the second fold-back part 14 toward the inner peripheral side on the enclosed fluid side B, and a flange part 16 extended toward the inner peripheral side from the distal end of the second fold-back part 14 on the enclosed fluid side B, the second cylindrical part 13 being adapted to be moved in a radial direction (in a direction β as shown in the figure) around the first fold-back part 12 as a fulcrum, as shown in Fig. 2.

The sealing part 20 is composed of the fixed seal part 21 covering the cylindrical parts of the core 10 and making contact with the housing 2, and a seal body part 22 integrally molded with the fixed seal part 21 and cured and bonded to the flange part 16 of the core 10. The seal body part 22 is composed of an ole seal lip 23 located being off from the flange part 16 of the core 10 toward the atmospheric side A, a subseal lip 24 located being off from the oil seal lip 23 toward the atmospheric side A, a first dust seal lip 25 located being off from the flange part 16 of the core toward the atmospheric side A and having a distal end part facing toward the atmospheric side A and adapted to slide on a shaft so as to seal off foreign matter such as slurry or dust from the atmospheric side A, and a second dust seal lip 26 located being off from the first dust seal lip 25 toward the enclosed fluid side B. It is noted that a recess formed in the oil seal lip 23 on the outer peripheral side remote from the lip edge thereof is fitted therein with the gutter spring 30 for radially urging the oil seal lip 23.

Since the second cylindrical part 13 of the core 10 is moved toward inner peripheral side (in the direction β as shown in the figure) around the first fold-back part 12 as a fulcrum when the oil seal 1 is inserted in an annular gap defined between the housing 2 and the shaft from the atmospheric side A toward the enclosed fluid side B (in the direction α as shown in the figure) with the oil seal lip 23 side (the left side in the figure) being a forehead, it can be simply inserted. Further, since an end part 17 of the second cylindrical part 13 is moved toward the outer peripheral side (in the direction γ as shown in the figure) around the first fold-back part 12 as a fulcrum so as to approach the housing 2 (the position indicted by the dotted line), due to the stiffness of the core 10, when the end face 18 of the second cylindrical part 13 comes toward the enclosed fluid side B by way of the position of the side end face 4 of the protrusion 3 formed on the housing 2, the end face 18 of the second cylindrical part 13 can be made into slide contact with the side end face 4 of the protrusion 3 formed on the housing 2, thereby it is possible to secure the oil seal 1 in the annular gasp without using a seal retaining component. Further, the end face 18 of the second cylindrical part 13 and an enclosed fluid side end face 27 of a protrusion 21 A of the fixed seal part 21 hold therebetween the protrusion 3 formed on the housing 2 for sealing in cooperation, thereby it is possible to enhance the sealing ability for the housing 2.

Further, in the oil seal 1 secured in the annular gap in which the oil seal lip 23 and the suboil seal lip 24 mainly serve to seal oil while the plurality of seal lips , that is, the first dust seal lip 25 and the second dust seal lip 26 have their forehead parts facing the atmospheric side so as to be made into slide contact with the shaft in order to surely seal off foreign matter such as slurry or dust, and accordingly, the necessity of fitting a dust seal which is separate or independent from the oil seal can be eliminated, thereby it is possible to simplify the fitting of the oil seal in the annular gap.

Further, since only one seal ring is fitted without the necessity of a dust seal, it can be fitted in a narrow space, and further, since only a fitting part in which a single oil seal alone is fitted is required, the area of fabrication of of the fitting part can be reduced. Further, an axial play of the oil seal 1 can be prevented without the necessity of a seal retaining component (snap ring which has been conventionally used), and accordingly, the number of components can be reduced, thereby it is possible to aim at enhancing the efficiency of the fitting.

### Second Embodiment

Referring to Fig. 3 which shows an oil seal in a second embodiment of the present invention, the oil seal in this embodiment differs from the oil seal in the first embodiment in view of such a configuration that the position of the second fold-back part 14 of the core 10 is over-hanged being off from the end face 5 of the housing 2 on the atmospheric side A, toward the atmospheric side A. With this configuration, the protrusion 21 A of the fixed seal part 21 can be further stiffened, and accordingly, the sealing ability with which the end face 18 of the second cylindrical part 13 of the core 10 and the enclosed fluid side end face 27 of the protrusion 21 A of the fixed seal part 21 hold therebetween the protrusion 3 formed on the housing 2 in corporation for sealing, can be further enhanced in comparison with the oil seal in the first embodiment. Except the above-mentioned configuration, the configuration of the second embodiment is the same as that of the first embodiment.

### Third Embodiment

Referring to Fig. 4 which shows a third embodiment of the present invention, this embodiment differs from the first embodiment in view of such a configuration that the core 10 only has the first fold-back 12 extended toward the outer peripheral side with no second cylindrical part, and accordingly, a crown-like seal retaining part 31 as shown in Fig. 6 has a first end part 31 a which is cured and fixed, integral with the outer peripheral part 21 B of the fixed seal part 21 so as to abut against a side surface 12a of the first fold-back part 12 on the atmospheric side A, at the outer peripheral side of the first cylindrical part 11.

When the above-mentioned oil seal 1 is inserted in an annular gap defined between the housing and the shaft from the atmospheric side A in the direction of the arrow α with the oil seal lip 23 side (the left side in the figure) being a forehead, a second end part of the seal retaining part 31 is moved toward the inner peripheral side (in the direction of the arrow β) around the first end part 31 a as a fulcrum which abuts against the first fold-back part 12, to a position indicated by the chain line, as shown in Fig. 5, aordingly, it can be simply inserted. Further, when the second end part 31 b comes to the enclosed fluid side B by way of the side end face 4 of the protrusion 3 formed on the housing, since the second end part 31 b is returned toward the outer peripheral side (in the direction of the arrow β) up to a position indicated by the dotted line due to the stiffness of the seal retaining part 31, the second end part 31 b can be made into press contract with the side end face 4 of the protrusion 3 of the housing 2, and accordingly, the oil seal 1 can be secured in the annular gap. Further, the second end part 31 b of the seal retaining part 31 and the enclosed fluid side end face 27 of the protrusion 21 A of the fixed seal part 21 hold therebetween the protrusion 3 formed on the housing 2 in cooperation for sealing, thereby it is possible to enhance the sealing ability for the housing 2.

Further, in the oil seal 1 fixed in the annular gap, the oil seal lip 23 and the suboil seal lip 24 mainly serve to seal oil while the plurality of dust seal lips, that is, the first dust seal lip 25 and the second dust seal lip 26 are extended toward the atmospheric side A, being made into slide contact with the shaft, and accordingly, it can surely seal off foreign matter such as slurry or dust.

Thus, the necessity of fitting a dust seal which separate or independent from the oil seal can be eliminated, thereby it is possible to simplify the fitting of the oil seal in the annular gap.

It is noted that a recess may be formed in the first dust seal lip 25 on the outer peripheral side remote from the lip edge thereof in any one of the first to third embodiments, and the gutter spring 30 is fitted in the recess in order to reinforce the urging force of the dust seal lips against the shaft.

## Claims

1. An oil seal disposed in an annular gap between two mutally relatively rotatably assembled members, comprising: a core metal fitted into one member; an oil seal lip which is vulcanised / bonded to the core metal and which slides on the other member and which seals a sealing object; and a plurality of dust seal lips which are positioned on an atmospheric side from the oil seal lip and which slide on the other member with tip portions directed toward the atmospheric side and which seals external dust and the like.

2. The oil seal according to claim 1, wherein a cylindrical portion extending from a return portion of the core metal in an outer peripheral direction press-contacts a convex portion formed on the one member.

3. The oil seal according to claim 1, wherein a seal pressing component fixed by a fixing sealing portion on the outer peripheral side of the core metal press-contacts a convex portion formed on the one member.
